# EUROPÄISCHE PATENTANMELDUNG

(11) **EP 4 712 364 A1**
(43) Veröffentlichungstag der Anmeldung: **18.03.2026**
(21) Anmeldenummer: 25201313.1
(22) Anmeldetag: 10.09.2025
(51) Int. Cl.: H04B 10/071, H04B 10/85

(54) **ERKENNUNG EINER MANIPULATION AN EINER KOMMUNIKATIONSLEITUNG**

(30) Priorität: 17.09.2024 DE 102024002997
(71) Anmelder: Diehl Defence GmbH & Co. KG, 88662 Überlingen (DE)
(72) Erfinder: Seyfarth, Stefan, 91052 Erlangen (DE); Barth, Robin, 91448 Emskirchen (DE); Haas, Bernd, 90762 Fürth (DE)
(74) Vertreter: Diehl Patentabteilung

(57) **Zusammenfassung**

Die Erfindung betrifft ein Verfahren (100) zur Überwachung (108) einer Kommunikationsleitung (10), bei welchem ein Referenzwert betreffend wenigstens eine Kenngröße der Kommunikationsleitung (10) erfasst wird (102) und bei welchem ein Ist-Wert betreffend die wenigstens eine Kenngröße der Kommunikationsleitung (10) erfasst wird (104). Auf Grundlage eines Vergleichs des erfassten (102) Referenzwerts mit dem erfassten (104) Ist-Wert betreffend die wenigstens eine Kenngröße eine Information betreffend eine Manipulation (114) an der Kommunikationsleitung (10) ermittelt wird (106).

## Beschreibung

Die Erfindung betrifft ein Verfahren zur Überwachung einer Kommunikationsleitung, eine Datenübertragungsvorrichtung zur Durchführung des Verfahrens, ein Computerprogramm sowie ein computerlesbares Medium.

Um eine hohe Abhörsicherheit bei der Übertragung von Daten zu erreichen, ist es bereits bekannt, diese zu verschlüsseln. Dadurch kann einem Dritten ein Zugriff auf den Inhalt der Daten erschwert werden. Ein Zugriff auf die Daten kann auf diese Weise jedoch nicht ausgeschlossen werden. Überdies kann es Anwendungsfälle geben, bei welchem geheimhaltungsbedürftige Informationen unverschlüsselt übertragen werden. Daher müssen zum Zwecke eines Schutzes geheimhaltungsbedürftiger Daten häufig zusätzliche Maßnahmen bereitgestellt werden, um bereits ein Abgreifen der Daten zu verhindern. So müssen beispielsweise Daten, welche zum Zwecke einer Steuerung sicherheitskritischer oder militärischer Systeme übertragen werden, besonders geschützt werden. Derartige Daten werden in der Regel mittels Lichtwellenleitern übertragen. Problematisch hierbei ist, dass bereits ein Ausleiten eines geringen Bruchteils eines zum Zwecke der Datenübertragung in die Lichtwellenleiter eingekoppelten Lichts die Möglichkeit eröffnet, die übertragenen Daten abzuhören. Beispielsweise können die mittels Lichtwellenleiter übertragenen Daten mithilfe eines sogenannten Biegekopplers abgehört werden. Der Biegekoppler nutzt die Eigenschaft des Lichts aus, dass im Falle einer Krümmung der Lichtwellenleiter ein Bruchteil des eingekoppelten Lichts aus den Lichtwellenleitern austritt. Der Lichtwellenleiter wird im Zuge dessen zwar gekrümmt, insgesamt jedoch nur geringfügig beeinträchtigt. Eine Zerstörung der Lichtwellenleiter ist in diesem Zusammenhang nicht erforderlich. Es ist daher üblich, dass Lichtwellenleiter, mittels welchen geheimhaltungsbedürftige Daten übertragen werden, mithilfe von Sicherheitspersonal überwacht wird. Um eine hohe Abhörsicherheit bereitstellen zu können werden beispielsweise Kontrollgänge durchgeführt, bei welchen regelmäßig ein Zustand und gegebenenfalls Manipulationen oder Manipulationsversuche an der Kommunikationsleitung überwacht werden. Derartige Kontrollgänge können in der Regel jedoch nicht lückenlos bereitgestellt werden. Des Weiteren kann bei militärischen Anwendungen ein Kontrollgang mit einer hohen Gefahr für das den Kontrollgang durchführende Sicherheitspersonal verbunden zu sein.

Der vorliegenden Erfindung liegt die Aufgabe zugrunde, ein verbessertes Verfahren zur Erkennung eines Abhörens oder eines Abhörversuchs betreffend mittels einer Kommunikationsleitung übertragener Daten bereitzustellen.

Diese Aufgabe wird gelöst durch ein Verfahren mit den Merkmalen des Anspruchs 1.

Ferner liegt der Erfindung die Aufgabe zugrunde, eine Datenübertragungsvorrichtung bereitzustellen, mittels welcher das erfindungsgemäße Verfahren durchführbar ist.

Diese Aufgabe wird gelöst durch eine Datenübertragungsvorrichtung mit den Merkmalen des Anspruchs 12.

Ferner liegen der Erfindung die Aufgaben zugrunde, ein Computerprogramm sowie ein computerlesbares Medium anzugeben.

Diese Aufgaben werden gelöst durch ein Computerprogramm mit den Merkmalen des Anspruchs 14 sowie durch ein computerlesbares Medium mit den Merkmalen des Anspruchs 15.

Vorteilhafte Weiterbildungen sind jeweils Gegenstand abhängiger Unteransprüche.

Bei dem erfindungsgemäßen Verfahren wird eine Kommunikationsleitung überwacht. Hierzu ist vorgesehen, dass ein Referenzwert betreffend wenigstens eine Kenngröße der Kommunikationsleitung erfasst wird. Des Weiteren sieht das erfindungsgemäße Verfahren vor, dass ein Ist-Wert betreffend die wenigstens eine Kenngröße der Kommunikationsleitung erfasst wird. Auf Grundlage eines Vergleichs des erfassten Referenzwerts mit dem erfassten Ist-Wert betreffend die wenigstens eine Kenngröße wird daraufhin eine Information betreffend eine Manipulation der Kommunikationsleitung ermittelt.

Unter einer Kenngröße der Kommunikationsleitung soll im vorliegenden Zusammenhang eine der Kommunikationsleitung inhärente physikalische Kenngröße, wie beispielsweise eine Temperatur, eine Art einer Krümmung oder eine Anzahl an Krümmungen entlang eines Verlaufs der Kommunikationsleitung, verstanden werden.

Bei der Manipulation der Kommunikationsleitung handelt es sich beispielhaft um eine gezielte und/oder verdeckte Einflussnahme auf einen Verlauf, einen Zustand und/oder eine Unversehrtheit der Kommunikationsleitung. Insbesondere wird eine Installation von Vorkehrungen zum Zwecke eines Abhörens von mittels der Kommunikationsleitung übertragener Daten als Manipulation im Sinne der Erfindung angesehen.

Dadurch kann eine physikalische Veränderung der Kommunikationsleitung rasch erkannt werden. Eine Manipulation an der Kommunikationsleitung kann dadurch zuverlässig entdeckt werde. Dies ermöglicht es, aufwandsgünstig einen Abhörversuch oder ein Abhören von Daten mit nur geringem Personaleinsatz zu ermitteln. Im bevorzugten Anwendungsfall kann auf Kontrollgänge entlang der Kommunikationsleitung vollständig verzichtet werden. Im militärischen Anwendungsfall kann dadurch eine Gefahr für eine den Kontrollgang durchführende Person vermieden werden.

Bevorzugterweise wird als die wenigstens eine Kenngröße eine Länge der Kommunikationsleitung, eine Anzahl an und eine Art von Krümmungen und/oder eine Anzahl an, eine Art von und/oder eine Position von Verbindungsstellen entlang wenigstens eines Abschnitts der Kommunikationsleitung erfasst. Abzweigungen oder Biegestellen, welche zum Zwecke eines Abhörens der Daten von einem Dritten vorgesehen werden, können dadurch rasch aufgeklärt werden. Des Weiteren können dadurch auf einfache Weise verschiedene Arten einer Manipulation oder eines Manipulationsversuchs an der Kommunikationsleitung unterschieden werden. Bevorzugterweise können dadurch sicherheitsrelevante von irrelevanten Manipulationen unterschieden werden.

Zweckmäßigerweise wird eine als Lichtwellenleiter ausgeführte Kommunikationsleitung überwacht. Eine derartige Kommunikationsleitung kann ein Bündel mit einer vorbestimmten Anzahl an Lichtwellenleitern aufweisen. Ein Abhören von Daten durch Ausleiten von geringen Anteilen eines eingekoppelten Lichts aus dem Lichtwellenleiter kann rasch und zuverlässig erkannt werden. Ein Abhörversuch, beispielsweise mittels eines Biegekopplers, kann frühzeitig identifiziert werden.

Eine vorteilhafte Weiterbildung sieht vor, dass der Referenzwert und/oder der Ist-Wert der wenigstens einen Kenngröße mittels einer optischen Zeitbereichsreflektometrie erfasst wird. Die Zeitbereichsreflektometrie ist im englischen Sprachgebrauch auch bekannt unter der Bezeichnung "Time Domain Reflectometry". Unter der optischen Zeitbereichsreflektometrie soll im vorliegenden Zusammenhang ein Verfahren zur Ermittlung und Analyse von Lauflängen und/oder Reflexionscharakteristika elektromagnetischer Wellen in der Kommunikationsleitung verstanden werden. Mithilfe der optischen Zeitbereichsreflektometrie können der Referenzwert sowie der Ist-Wert aufwandsgünstig und zeiteffizient ermittelt werden. Dadurch kann eine hohe Genauigkeit bei der Überwachung der Kommunikationsleitung erreicht werden. Manipulationsversuche können frühzeitig und rasch erkannt werden. Dies ermöglicht es, ein präzises und zuverlässiges Überwachungsverfahren bereitzustellen. Überdies kann auf diese Weise eine durchgängige Überwachung der Kommunikationsleitung über eine gesamte Erstreckung derselben hinweg aus einer vorbestimmten Distanz durchgeführt werden. Die Kommunikationsleitung kann somit aufwandsgünstig überwacht werden.

In einer vorteilhaften Ausführungsvariante wird vorgesehen, dass mittels der optischen Zeitbereichsreflektometrie eine Verbindungsstelle und/oder wenigstens ein gekrümmter Abschnitt entlang der Kommunikationsleitung lokalisiert wird. Dadurch kann ein Verlauf der Kommunikationsleitung mit hoher Genauigkeit erfasst werden. Besonders bevorzugt kann dadurch ein Referenzzustand der Kommunikationsleitung aufwandsgünstig erfasst werden. Im Falle einer Veränderung einer Lage oder einer Krümmung eines Verlaufs der Kommunikationsleitung kann diese rasch auf Basis des erfassten Referenzzustands erkannt werden. Des Weiteren kann ein Ort der Veränderung rasch identifiziert werden. Dies ermöglicht es, zielgerichtet Maßnahmen einzuleiten, um einer weitergehenden Manipulation entgegenzuwirken und/oder die Manipulation zu beseitigen. Einem Abhören von Daten kann dadurch rasch und zielgerichtet entgegengewirkt werden.

Eine weitere vorteilhafte Weiterbildung sieht vor, dass der Referenzwert und/oder der Ist-Wert betreffend die wenigstens eine Kenngröße der Kommunikationsleitung auf Grundlage einer Raman-Streuung und/oder einer Brillouin-Streuung ermittelt wird. Mithilfe der Raman-Streuung kann auf einfache Weise eine Temperatur der Kommunikationsleitung erfasst werden. Mithilfe der Brillouin-Streuung können eine Information betreffend eine Materialeigenschaft oder einen mechanischen Zustand der Kommunikationsleitung, wie eine Stauchung und/oder eine Streckung, ermittelt werden. Auf Basis der Kenngröße Temperatur und/oder einer Information betreffend eine Materialeigenschaft oder einen mechanischen Zustand der Kommunikationsleitung können auf einfache und zuverlässige Weise verschiedene Arten einer Manipulation oder eines Manipulationsversuchs rasch und zuverlässig erkannt und identifiziert werden.

Eine weitere vorteilhafte Weiterbildung sieht vor, dass der Ist-Wert betreffend die wenigstens eine Kenngröße zum Zwecke einer Ermittlung eines Ist-Zustands der Kommunikationsleitung während eines normalen Betriebs der Kommunikationsleitung erfasst wird. Bevorzugterweise wird der Ist-Wert betreffend die wenigstens eine Kenngröße ohne eine Unterbrechung einer Datenübertragung erfasst. Beispielsweise wird der Ist-Wert betreffend die wenigstens eine Kenngröße während einer vorgesehenen Übertragungspause erfasst. Während des normalen Betriebs der Kommunikationsleitung werden vorzugsweise Daten zwischen zwei Kommunikationsteilnehmern übertragen. Der Referenzwert wird vorzugsweise vor einer Aufnahme des normalen Betriebs der Kommunikationsleitung erfasst. Dennoch kann vorgesehen sein, dass der Referenzwert während des normalen Betriebs der Kommunikationsleitung erfasst wird. Beispielsweise im Falle einer erkannten unkritischen Veränderung eines Ist-Zustands, welcher als Referenzzustand herangezogen wird. Eine Beeinträchtigung des normalen Betriebs der Kommunikationsleitung kann daher kleingehalten oder gar vermieden werden. Dies ermöglicht es auch, Kommunikationsleitungen in bereits bestehenden Kommunikationssystemen aufwandsgünstig zu überwachen.

Des Weiteren sieht eine vorteilhafte Weiterbildung vor, dass der Referenzwert und/oder der Ist-Wert betreffend die wenigstens eine Kenngröße der Kommunikationsleitung auf Grundlage von in die Kommunikationsleitung eingekoppelter Testsignale vorbestimmter Frequenz erfasst wird. Vorzugsweise werden die Testsignale mit einer Frequenz in die Kommunikationsleitung eingekoppelt, welche sich von einer zum Zwecke einer Datenübertragung genutzten Frequenz unterscheidet. Mithilfe der Testsignale kann eine präzise Lokalisierung eines Unterschieds zwischen einem Referenzzustand und einem Ist-Zustand der Kommunikationsleitung ermöglicht werden. Ferner können Maßnahmen zur Wiederherstellung des Referenzzustands oder zu einer Beseitigung einer Manipulation gezielt durchgeführt werden.

In einer anderen vorteilhaften Weiterbildung wird im Falle, dass ein Differenzwert, welcher aus dem erfassten Referenzwert und dem erfassten Ist-Wert betreffend die wenigstens eine Kenngröße gebildet ist, einen vorbestimmten Schwellenwert überschreitet, die Information betreffend die Manipulationen der Kommunikationsleitung ausgegeben wird. Dadurch können auf einfache Weise relevante und irrelevante Veränderungen an der Kommunikationsleitung unterschieden werden. Ferner kann ein Bediener dadurch effizient und komfortabel erfassen, ob eine Manipulation an der Kommunikationsleitung vorliegt. Des Weiteren können infolge der Ausgabe der Information betreffend die Manipulation geeignete Maßnahmen bestimmt werden, um dem Manipulationsversuch oder der Manipulation entgegenzuwirken. Dadurch kann eine Abhörsicherheit aufwandsgünstig erhalten oder wiederhergestellt werden.

In einer vorteilhaften Ausführungsvariante wird als Information betreffend die Manipulation der Kommunikationsleitung eine Art der Manipulation sowie eine Position der Manipulation entlang der Kommunikationsleitung ausgegeben. Die Maßnahmen zur Beseitigung der Manipulation können dadurch gezielt eingeleitet und koordiniert werden. Eine Sabotage oder eine Manipulation kann rasch und effizient aufgedeckt und/oder beseitigt werden. Der normale Betrieb der Kommunikationsleitung kann gegebenenfalls unterbrochen und/oder aufwandsgünstig wiederhergestellt werden.

Eine andere vorteilhafte Weiterbildung sieht vor, dass eine separate Überwachungsleitung zu Überwachung der Kommunikationsleitung vorgesehen wird. Insbesondere handelt es sich bei der separaten Überwachungsleitung um einen separaten Lichtwellenleiter. Mithilfe der separaten Überwachungsleitung kann eine kontinuierliche und dauerhafte Überwachung der Kommunikationsleitung ohne eine Beeinflussung einer Datenübertragung mittels der Kommunikationsleitung ermöglicht werden. Die separate Überwachungsleitung kann überdies zweckmäßigerweise als ein ausgedehnter Sensor verwendet werden. Mittels des ausgedehnten Sensors kann vorzugsweise eine zeitlich sowie räumlich kontinuierliche Überwachung entlang einer gesamten Erstreckung der Kommunikationsleitung realisiert werden.

Mittels der erfindungsgemäßen Datenübertragungsvorrichtung ist das erfindungsgemäße Verfahren durchführbar.

Die erfindungsgemäße Datenübertragungsvorrichtung weist eine Kommunikationsleitung auf. Bevorzugterweise weist die Datenübertragungsvorrichtung des Weiteren einen optischen Zeitbereichsreflektometer auf. Im englischen Sprachgebrauch ist ein solcher optischer Zeitbereichsreflektometer als "Optical Time-Domain Reflectometer" bezeichnet. Bei diesem handelt sich um ein optoelektronisches Instrument, mittels welchem die optische Zeitbereichsreflektometrie durchgeführt wird. Insbesondere werden mittels des optischen Zeitbereichsreflektometers Reflexionseigenschaften und Transmissionseigenschaften einer Leitung charakterisiert. Zweckmäßigerweise ist das optische Zeitbereichsreflektometer dazu eingerichtet, Testsignale in Form von elektromagnetischen Wellen vorbestimmter Frequenz in die Kommunikationsleitung einzukoppeln. Im Falle eines Lichtwellenleiters werden üblicherweise Laserpulse in diesen eingekoppelt und das Rückstreulicht ausgewertet. Bevorzugterweise erfolgt die Auswertung des Rückstreulichts auf Grundlage einer Raman-Streuung und/oder einer Brillouin-Streuung.

Mithilfe der erfindungsgemäßen Datenübertragungsvorrichtung kann eine Abhörsicherheit der Kommunikationsleitung gesteigert werden. Ferner kann eine Überwachung der Kommunikationsleitung aus einer sicheren Entfernung durchgeführt werden. Im militärischen Anwendungsfall kann dadurch vermieden werden, dass Personen Kontrollgänge durchführen müssen und sich dabei einer Gefahr eines feindlichen Angriffs aussetzen. Des Weiteren kann ein Abhören von Daten rasch erkannt und diesem entgegengewirkt werden.

In einer vorteilhaften Weiterbildung ist ein Lichtwellenleiter als die Kommunikationsleitung ausgeführt. Vorzugsweise weist die Kommunikationsleitung mehrere Lichtwellenleiter auf, wovon eine der mehreren Lichtwellenleiter als eine separate Überwachungsleitung zum Zwecke einer Durchführung des Verfahrens vorgesehen ist. Dadurch kann sowohl zeitlich als auch räumlich eine kontinuierliche Überwachung der Kommunikationsleitung durchgeführt werden. Die separate Überwachungsleitung kann als ein ausgedehnter Sensor verwendet werden. Ein Einfluss des Verfahrens zur Überwachung der Kommunikationsleitung auf eine Datenübertragung in einem normalen Betrieb der Kommunikationsleitung kann mittels der separaten Überwachungsleitung vermieden werden.

Des Weiteren sieht die Erfindung ein Computerprogramm vor, welches bei dessen Ausführung die Datenübertragungsvorrichtung gemäß der Erfindung dazu veranlasst, das erfindungsgemäße Verfahren durchzuführen.

Überdies sieht die Erfindung ein computerlesbares Medium vor. Dieses weist Instruktionen auf, welche die erfindungsgemäße Datenübertragungsvorrichtung dazu veranlassen, das erfindungsgemäße Verfahren durchzuführen. Bei dem computerlesbaren Medium kann es sich beispielsweise um eine CD-ROM, eine DVD, einen USB- oder Flash-Speicher oder um ein nicht körperliches Medium, wie einen Datenstrom und/oder ein digitales Trägersignal handeln.

In einer Ausführungsvariante verbindet die Kommunikationsleitung zur Datenübertragung zwei Kommunikationsteilnehmer eines militärischen Systems miteinander. Zweckmäßigerweise umfasst die Datenübertragungsvorrichtung die beiden Kommunikationsteilnehmer des militärischen Systems. Bei dem militärischen System kann es sich beispielsweise um ein Luftverteidigungssystem, insbesondere ein bodengebundenes Luftverteidigungssystem handeln. Bei den Kommunikationsteilnehmern kann es sich im Fall eines Luftverteidigungssystems zum Beispiel um eine Radarvorrichtung und einen Gefechtsstand handeln, die über die Kommunikationsleitung zur Datenübertragung bzw. zum Datenaustausch miteinander verbunden sind.

Die beiden Kommunikationsteilnehmer des militärischen Systems tauschen beispielsweise Steuerungsbefehle, Statusnachrichten und/oder Daten zur Freund-Feind-Kennung über die Kommunikationsleitung miteinander aus. Bei militärischen Systemen werden solche Daten üblicherweise verschlüsselt übertragen, beispielsweise unter Verwendung von Kryptoverfahren. Um einen zusätzlichen Schutzmechanismus neben der Verschlüsselung der Daten zu haben, der ein Abgreifen der Daten des militärischen Systems detektiert, bietet sich das erfindungsgemäße Verfahren zur Überwachung der Kommunikationsleitung an. Durch das erfindungsgemäße Verfahren können in Reaktion auf die Information betreffend eine Manipulation an der Kommunikationsleitung Gegenmaßnahmen eingeleitet werden, die einen ordnungsgemäßen Betrieb des militärischen Systems wiederherstellen und/oder einen ungewollten Datenabfluss beseitigen. Insoweit kann das erfindungsgemäße Verfahren in einer bevorzugten Ausführungsvariante auch Maßnahmen zur Minimierung der Auswirkung einer Manipulation umfassen, wie beispielsweise Aussetzung der Datenübertragung für eine vorbestimmte Zeit oder Übertragung bewusst falscher oder irrelevanter Daten, also eine Falschdatenübertragung für eine vorbestimmte Zeit.

Vorzugsweise ist zumindest einer der beiden Kommunikationsteilnehmer des militärischen Systems mit einer Einrichtung zur Ausgabe einer Information betreffend eine Manipulation an der Kommunikationsleitung ausgestattet. Bei dieser Einrichtung kann es sich um eine Rechnereinheit handeln, die über einen Monitor und/oder Lautsprecher einem Bediener eine entsprechende Information anzeigt und/oder ausgibt. Vorzugsweise erhält der Bediener als Information betreffend die Manipulation eine Information über Art der Manipulation und/oder eine Information über die Position der Manipulation entlang der Kommunikationsleitung.

Wenn die beiden Kommunikationsteilnehmer über eine als Lichtwellenleiter ausgeführte Kommunikationsleitung miteinander verbunden sind, weist zumindest einer der beiden Kommunikationsteilnehmer ein optisches Zeitbereichsreflektometer zur Erfassung des Referenz- und/oder Ist-Werts betreffend die wenigstens eine Kenngröße auf. Praktischerweise ist das optische Zeitbereichsreflektometer mit der Einrichtung zur Ausgabe einer Information betreffend eine Manipulation an der Kommunikationsleitung wirkverbunden oder von dieser umfasst. Wenn das militärische System als Kommunikationsteilnehmer einen Gefechtsstand umfasst, sind die Einrichtung zur Ausgabe einer Information und das Zeitbereichsreflektometer vorzugsweise vom Gefechtsstand umfasst. Um einen Bediener des Gefechtsstands zu entlasten, wird vorzugsweise nur dann eine Information betreffend die Manipulation an der Kommunikationsleitung an der Einrichtung zur Ausgabe einer Information ausgegeben, wenn ein aus dem erfassten Referenzwert und dem erfassten Ist-Wert gebildeter Differenzwert einen vorbestimmten Schwellwert überschreitet. Wenn es sich bei der Einrichtung zur Ausgabe einer Information um eine Rechnereinheit handelt, ist diese zur Bildung des Differenzwerts und Vergleich mit einem vorbestimmten Schwellwert eingerichtet. In einer besonders bevorzugten Ausgestaltung kann die Rechnereinheit dazu eingerichtet sein, abhängig oder unabhängig von der Information über Art und/oder Position der Manipulation, dem Bediener Auswahlmöglichkeiten zur Minimierung der Auswirkung einer Manipulation zur Verfügung zu stellen. Zu diesen Möglichkeiten können beispielsweise Aussetzung der Datenübertragung für eine vorbestimmte Zeit oder Übertragung bewusst falscher oder irrelevanter Daten für eine vorbestimmte Zeit oder eine Verlegung des militärischen Systems bzw. des Luftverteidigungssystems an einen anderen Ort gehören. Zum Zweck der Aussetzung der Datenübertragung bzw. der Falschdatenübertragung ist die Rechnereinheit bevorzugt entsprechend eingerichtet und mit der Kommunikationsleitung wirkverbunden. Abhängig von der Höhe der Überschreitung des vorbestimmten Schwellwerts und/oder der Art der Manipulation und/oder der Position der Manipulation entlang der Kommunikationsleitung können entsprechende vorbestimmte Zeiten zur Aussetzung der Datenübertragung / Falschdatenübertragung in einem Speicher der Rechnereinheit hinterlegt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, welche im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden. Bei den im Folgenden näher beschriebenen Figuren handelt es sich um schematische und nicht maßstabsgetreue Darstellungen.

Es zeigen:
- FIG 1: ein Ausführungsbeispiel der erfindungsgemäßen Datenübertragungsvorrichtung sowie eine Illustration eines Beispiels zur Überwachung einer Kommunikationsleitung der Datenübertragungsvorrichtung;
- FIG 2: eine Illustration des Beispiels des Verfahrens zur Überwachung der Kommunikationsleitung anhand eines schematischen Ablaufdiagramms.

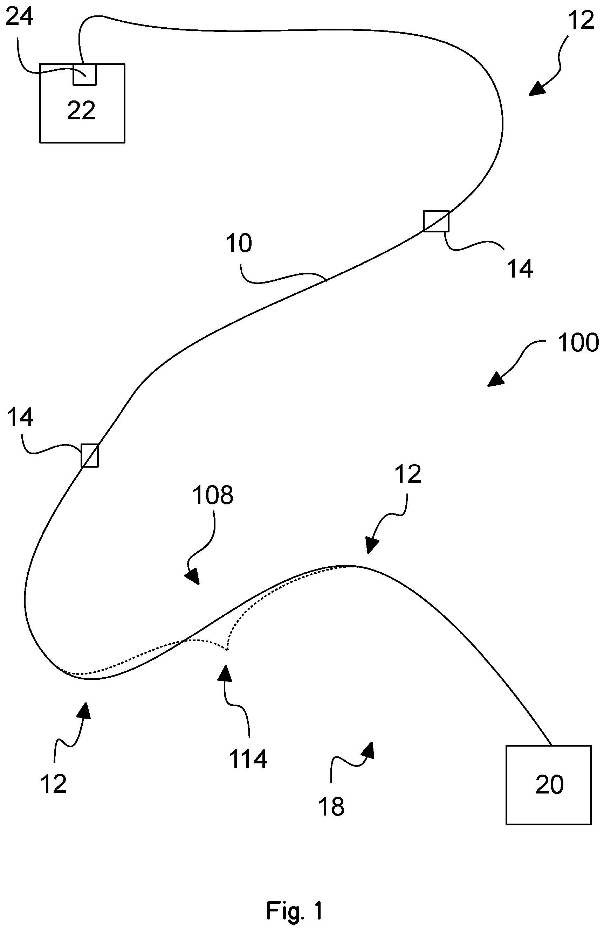

FIG 1 zeigt eine schematische Darstellung eines Ausführungsbeispiels einer Datenübertragungsvorrichtung 18. Die Datenverarbeitungsvorrichtung 18 weist beispielhaft zwei Kommunikationsteilnehmer 20, 22 auf. Ein erster Kommunikationsteilnehmer 20 der zwei genannten Kommunikationsteilnehmer 20, 22 ist mittels einer Kommunikationsleitung 10 mit einem zweiten Kommunikationsteilnehmer 22 der zuvor genannten zwei Kommunikationsteilnehmer 22, 20 zum Zwecke einer Übertragung von Daten verbunden. Des Weiteren illustriert FIG 1 ein Beispiel eines Verfahrens 100 zur Überwachung 108 der genannten Kommunikationsleitung 10.

Im vorliegenden Ausführungsbeispiel handelt es sich bei dem ersten Kommunikationsteilnehmer 20 um eine Radarvorrichtung eines verlegbaren Luftverteidigungssystems. Bei dem zweiten Kommunikationsteilnehmer 22 handelt es sich beispielhaft um einen Gefechtsstand des genannten Luftverteidigungssystems. Zum Zwecke einer raschen Datenübertragung ist die Kommunikationsleitung 10 als ein Bündel mit mehreren Lichtwellenleitern ausgeführt. Beispielhaft werden mittels der Kommunikationsleitung 10 geheimhaltungsbedürftige Daten, wie beispielsweise Daten zum Zwecke einer Freund-Feind-Erkennung, Steuerungsbefehle und/oder Statusnachrichten, übertragen, welche zum Zwecke einer betriebssicheren Funktion des Luftverteidigungssystems erforderlich sind. Dementsprechend sind die mittels der Kommunikationsleitung 10 übertragenen Daten von hohem Interesse für feindliche Kräfte. Um ein Abhören der Daten zu verhindern, wird die Kommunikationsleitung 10 daher im Hinblick auf eine Manipulation 114 überwacht 108.

In einer vorteilhaften Ausführungsvariante weist das Bündel mit den mehreren Lichtwellenleitern der Kommunikationsleitung 10 einen der Übersichtlichkeit halber nicht näher dargestellten Lichtwellenleiter auf, welcher als separate Überwachungsleitung vorgesehen ist. Dadurch kann eine kontinuierliche und dauerhafte Überwachung 108 der Kommunikationsleitung 10 ohne eine Einflussnahme auf eine Datenübertragung ermöglicht werden. Die separate Überwachungsleitung kann dadurch als ein ausgedehnter Sensor betrachtet werden, mittels welchem entlang einer gesamten Erstreckung der Kommunikationsleitung 10 sowohl räumlich als auch zeitlich eine kontinuierliche Überwachung 108, beispielsweise aus dem Gefechtsstand, realisierbar ist.

Zum Zwecke einer Überwachung 108 der Kommunikationsleitung 10 weist das Ausführungsbeispiel der Datenübertragungsvorrichtung 18 einen optischen Zeitbereichsreflektometer 24 auf, welcher beispielhaft Teil des als Gefechtsstand ausgeführten zweiten Kommunikationsteilnehmers 22 vorgesehen ist. Mittels des Zeitbereichsreflektometers 24 werden im vorliegenden Ausführungsbeispiel Werte zu verschiedenen Kenngrößen der Kommunikationsleitung 10 auf Grundlage einer optischen Zeitbereichsreflektometrie erfasst 102, 104. Beispielhaft wird eine Länge der Kommunikationsleitung 10, eine Anzahl an gekrümmten Abschnitten 12, ein Krümmungsradius der gekrümmten Abschnitte 12, eine Anzahl an Verbindungsstellen 14 sowie eine Art der Verbindungsstellen 14 der Kommunikationsleitung 10 erfasst 102, 104.

Im vorliegenden Ausführungsbeispiel weist die Kommunikationsleitung 10 zwei Verbindungsstellen 14 auf. Ferner liegen beispielhaft mehrere gekrümmte Abschnitte 12 mit unterschiedlichen Krümmungsradien entlang der Kommunikationsleitung 10 vor, welche vorliegend durch nicht näher dargestellte topographische Gegebenheiten an einem Aufstellungsort des Ausführungsbeispiels der Datenübertragungsvorrichtung 18 bedingt sind.

Zum Zwecke einer Überwachung 108 der Kommunikationsleitung 10 wird zunächst für jede der zuvor genannten Kenngrößen ein Referenzwert erfasst 102. Auf Basis dieser erfassten 102 Referenzwerte wird sodann ein Referenzzustand der Kommunikationsleitung 10 ermittelt. In einer bevorzugten Ausführungsvariante wird des Weiteren mittels der optischen Zeitbereichsreflektometrie die Verbindungsstellen 14 sowie die genannten gekrümmten Abschnitte 12 lokalisiert 110. Dadurch kann der der Referenzzustand der Kommunikationsleitung 10 mit einer hohen Genauigkeit bereitgestellt werden. Des Weiteren können dadurch bereits geringe Veränderungen an der Kommunikationsleitung 10 rasch erkannt werden.

Zur Durchführung der optischen Zeitbereichsreflektometrie werden mittels des optischen Zeitbereichsreflektometers 24 elektromagnetische Testsignale vorbestimmter Frequenz in die Kommunikationsleitung 10 eingekoppelt. Reflexionen dieser Testsignale werden sodann erfasst und auf Grundlage einer Raman-Streuung und einer Brillouin-Streuung ausgewertet. Auf diese Weise werden sowohl Referenzwerte zu den vorgenannten Kenngrößen betreffend die Kommunikationsleitung 10 erfasst 102.

Nachdem der Referenzzustand der Kommunikationsleitung 10 ermittelt wurde, wird vorliegend vorgesehen, dass regelmäßig Ist-Werte zu den vorgenannten Kenngrößen der Kommunikationsleitung 10 erfasst werden 104. Auf Basis dieser Ist-Werte wird sodann ein Ist-Zustand der Kommunikationsleitung 10 ermittelt. Ein Erfassen 104 der genannten Ist-Werte erfolgt vorzugsweise während eines normalen Betriebs der Kommunikationsleitung 10. Mittels des optischen Zeitbereichsreflektometers 24 werden die Testsignale auf die zuvor beschriebene Weise eingekoppelt und ausgewertet. Dadurch kann der Ist-Zustand der Kommunikationsleitung 10 aufwandsgünstig ermittelt werden.

Auf Grundlage eines Vergleichs des Ist-Zustands mit dem Referenzzustand der Kommunikationsleitung 10 wird daraufhin eine Information betreffend eine Manipulation 114 an der Kommunikationsleitung 10 ermittelt 106.

Zur Veranschaulichung einer möglichen Manipulation wird in FIG 1 beispielhaft ein Abhörversuch illustriert. Die Abweichung des Ist-Zustands von dem Referenzzustand der Kommunikationsleitung 10 aufgrund der Manipulation 114 ist dabei mittels einer gestrichelten Linie dargestellt. In dem gestrichelten Abschnitt der Kommunikationsleitung soll beispielhaft ein nicht näher dargestellter Biegekoppler angebracht werden. Mithilfe des Biegekopplers können mittels der Kommunikationsleitung 10 übertragene Daten abgehört werden, indem ein kleiner Teil des Lichts aus dem Lichtwellenleiter ausgekoppelt wird. Ein derartiges Abhören von Daten ist aufgrund eines zerstörungsfreien Eingriffs des Biegekopplers nur schwer mit herkömmlichen Mitteln lokalisierbar. Vorliegend kann jedoch auf Grundlage eines Vergleichs des ermittelten Referenzzustands mit dem ermittelten Ist-Zustand rasch erkannt werden, dass ein weiterer gekrümmter Abschnitt 12 vorliegt, welcher einen sehr kleinen Krümmungsradius aufweist. Überdies kann mithilfe der optischen Zeitbereichsreflektometrie ein Ort der Manipulation 114 rasch und zuverlässig lokalisiert werden 110.

In einer bevorzugten Ausführungsvariante wird eine Information betreffend die Manipulation 114 ausgegeben 112. Auf diese Weise wird es einem Bediener in einem Gefechtsstand rasch ermöglicht, die Manipulation 114 zu erkennen und geeignete Maßnahmen zu ergreifen. Die zuvor beschriebene Manipulation 114 resultiert in einem zusätzlichen gekrümmten Abschnitt 12 mit einem kleinen Krümmungsradius. Dadurch wird eine Anzahl an gekrümmten Abschnitten 12 erhöht. Beispielhaft wird auf diese Weise ein Schwellwert betreffend eine maximale Anzahl an gekrümmten Abschnitten 12, welche einen vorbestimmten Krümmungsradius unterschreiten, überschritten. Infolgedessen sieht die bevorzugte Ausführungsvariante vor, dass die Information betreffend die Manipulation 114 an der Kommunikationsleitung 10 ausgegeben wird 112. Alternativ oder zusätzlich kann vorgesehen sein, dass die Information betreffend die Manipulation 114 ausgegeben wird 112, sobald ein Differenzwert, welcher aus einem der erfassten 102 Referenzwerte und einem dazu korrespondierenden der erfassten 104 Ist-Werte gebildet ist, einen vorbestimmten Schwellenwert überschreitet. Bevorzugterweise wird als Information betreffend die Manipulation 114 an der Kommunikationsleitung 10 eine Art der Manipulation 114 sowie eine Position der Manipulation 114 entlang der Kommunikationsleitung 10 ausgegeben 112. Dies ermöglicht es, effiziente und zielgerichtete Maßnahmen zur Beseitigung der Manipulation 114 zu ergreifen.

Eine Auswirkung der Manipulation 114 auf einen Betrieb des Luftverteidigungssystems kann dadurch aufwandsgünstig minimiert werden. Entweder können bewusst falsche oder irrelevante Daten übertragen werden oder eine Datenübertragung wird für eine vorbestimmte Zeit ausgesetzt. Ferner kann Personal angewiesen werden, die Manipulation 114 unschädlich zu machen, beispielsweise durch ein Entfernen des Biegekopplers.

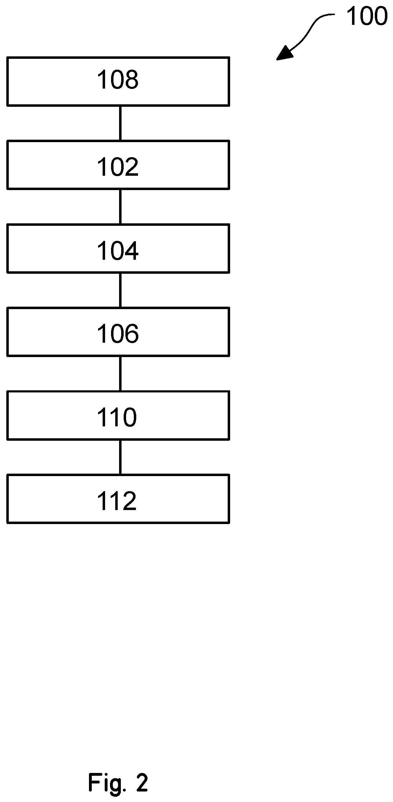

FIG 2 illustriert das im Zusammenhang mit FIG 1 bereits beschriebene Beispiel des Verfahrens 100 zur Überwachung 108 der Kommunikationsleitung 10 des Ausführungsbeispiels der Datenübertragungsvorrichtung 18 anhand eines schematischen Ablaufdiagramms.

### Bezugszeichenliste

- 100: Verfahren
- 102: Referenzwert erfassen
- 104: Ist-Wert erfassen
- 106: Information ermitteln
- 108: Überwachen
- 110: Lokalisieren
- 112: Information ausgeben
- 114: Manipulation

- 10: Kommunikationsleitung
- 12: gekrümmter Abschnitt
- 14: Verbindungsstelle
- 18: Datenübertragungsvorrichtung
- 20: Kommunikationsteilnehmer
- 22: Kommunikationsteilnehmer
- 24: Zeitbereichsreflektometer

## Patentansprüche

1. Verfahren (100) zur Überwachung (108) einer Kommunikationsleitung (10),
bei welchem
- ein Referenzwert betreffend wenigstens eine Kenngröße der Kommunikationsleitung (10) erfasst wird (102);
- ein Ist-Wert betreffend die wenigstens eine Kenngröße der Kommunikationsleitung (10) erfasst wird (104);
- auf Grundlage eines Vergleichs des erfassten (102) Referenzwerts mit dem erfassten (104) Ist-Wert betreffend die wenigstens eine Kenngröße eine Information betreffend eine Manipulation (114) an der Kommunikationsleitung (10) ermittelt wird (106).

2. Verfahren (100) nach Anspruch 1,
bei welchem als die wenigstens eine Kenngröße eine Länge der Kommunikationsleitung (10), eine Anzahl an gekrümmten Abschnitten (12) und/oder eine Anzahl an, eine Art der und/oder eine Position von Verbindungsstellen (14) entlang wenigstens eines Abschnitts der Kommunikationsleitung (10) erfasst wird (102, 104).

3. Verfahren (100) nach Anspruch 1 oder 2,
bei welchem eine als Lichtwellenleiter ausgeführte Kommunikationsleitung (10) überwacht wird (108).

4. Verfahren (100) nach einem der vorhergehenden Ansprüche,
bei welchem der Referenzwert und/oder der Ist-Wert betreffend die wenigstens eine Kenngröße mittels einer optischen Zeitbereichsreflektometrie erfasst wird (102, 104).

5. Verfahren (100) nach Anspruch 4,
bei welchem mittels der optischen Zeitbereichsreflektometrie eine Verbindungsstelle (14) und/oder wenigstens ein gekrümmter Abschnitt (12) entlang der Kommunikationsleitung (10) lokalisiert wird (110).

6. Verfahren (100) nach Anspruch 4 oder 5,
bei welchem der Referenzwert und/oder der Ist-Wert betreffend die wenigstens eine Kenngröße auf Grundlage einer Raman-Streuung und/oder einer Brillouin-Streuung ermittelt wird (102, 104).

7. Verfahren (100) nach einem der vorhergehenden Ansprüche,
bei welchem der Ist-Wert betreffend die wenigstens eine Kenngröße zum Zwecke einer Ermittlung eines Ist-Zustands der Kommunikationsleitung (10) während eines normalen Betriebs der Kommunikationsleitung (10) erfasst wird (104).

8. Verfahren (100) nach einem der vorhergehenden Ansprüche,
bei welchem der Referenzwert und/oder der Ist-Wert betreffend die wenigstens eine Kenngröße der Kommunikationsleitung (10) auf Grundlage von in die Kommunikationsleitung (10) eingekoppelter Testsignale vorbestimmter Frequenz erfasst wird (102, 104).

9. Verfahren (100) nach einem der vorhergehenden Ansprüche,
bei welchem im Falle, dass ein aus dem erfassten (102) Referenzwert und dem erfassten (104) Ist-Wert gebildeter Differenzwert einen vorbestimmten Schwellwert überschreitet, die Information betreffend die Manipulation (114) an der Kommunikationsleitung (10) ausgegeben wird (112).

10. Verfahren (100) nach einem der vorhergehenden Ansprüche,
bei welchem als Information betreffend die Manipulation (114) an der Kommunikationsleitung (10) eine Art der Manipulation (114) sowie eine Position der Manipulation (114) entlang der Kommunikationsleitung (10) ausgegeben wird (112).

11. Verfahren (100) nach einem der vorhergehenden Ansprüche,
bei welchem eine separate Überwachungsleitung, insbesondere ein separater Lichtwellenleiter, zur Überwachung der Kommunikationsleitung (10) vorgesehen wird.

12. Datenübertragungsvorrichtung (18) mit einer Kommunikationsleitung (10), welche dazu eingerichtet ist, das Verfahren (100) nach einem der vorhergehenden Ansprüche durchzuführen.

13. Datenübertragungsvorrichtung (18) nach Anspruch 12,
**dadurch gekennzeichnet,**
**dass** die Kommunikationsleitung (10) als ein Lichtwellenleiter ausgeführt ist und vorzugsweise eine separate Überwachungsleitung zum Zwecke einer Durchführung des Verfahrens (100) aufweist.

14. Computerprogramm, welches bei dessen Ausführung die Datenübertragungsvorrichtung (18) gemäß einem der Ansprüche 12 oder 13 dazu veranlasst, das Verfahren (100) nach einem der Ansprüche 1 bis 11 durchzuführen.

15. Computerlesbares Medium aufweisend Instruktionen, welche die Datenübertragungsvorrichtung (18) gemäß einem der Ansprüche 12 oder 13 dazu veranlasst, das Verfahren (100) nach einem der Ansprüche 1 bis 11 durchzuführen.
